# FASCICULE DE BREVET EUROPEEN

(11) **EP 1 766 588 B1**
(45) Date de publication et mention de la délivrance du brevet: **20.08.2008**
(21) Numéro de dépôt: 05752825.9
(22) Date de dépôt: 02.06.2005
(51) Int. Cl.: G07F 7/10

(54) **COMPOSANT POUR MODULE DE SÉCURITÉ**
SICHERHEITSMODUL-KOMPONENTE
SECURITY MODULE COMPONENT

(30) Priorité: 03.06.2004 EP 04102505
(43) Date de publication de la demande: 28.03.2007
(73) Titulaire: NagraCard SA, 1033 Cheseaux-sur-Lausanne (CH)
(72) Inventeur: KUDELSKI, André, CH-1095 Lutry (CH)
(74) Mandataire: Leman Consulting S.A.
(86) Numéro de dépôt international: PCT/EP2005/052519
(87) Numéro de publication internationale: WO 2005/119583

(56) Documents cités:
- DE-A- 19 811 646
- FR-A- 2 787 900
- FR-A- 2 834 154
- US-A1- 2003 093 615

## Description

### Domaine de l'invention

La présente invention concerne le domaine des modules de sécurité contenant au moins un processeur et des mémoires généralement sous la forme de cartes à puce. Celles-ci sont disponibles avec ou sans contacts et sont utilisées dans diverses applications nécessitant des transactions sécurisées comme par exemple le paiement, l'échange de données confidentielles ou le contrôle d'accès.

### Art antérieur

De façon bien connue de l'homme du métier, le module de sécurité peut être réalisé essentiellement selon trois formes distinctes. L'une d'elles est une carte à microprocesseur, une carte à puce, ou plus généralement un module électronique (ayant une forme de clé, de badge,...). Un tel module est généralement amovible et connectable à un décodeur de télévision numérique à péage. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit soudé ou monté sur un socle voire un connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Plus particulièrement, dans le cadre de la télévision numérique à péage ces modules de sécurité sont sous la forme de cartes. Elles servent de moyens de personnalisation et de sécurisation de l'accès à des programmes cryptés reçus par des décodeurs installés chez les abonnés.

Afin d'améliorer la sécurité d'un accès à des données payantes et empêcher diverses tentatives de fraude, plusieurs solutions ont été adoptées telles que: une encapsulation matérielle du module de sécurité, des algorithmes d'encryption sophistiqués, des clés d'encryption / décryption de taille binaire élevée, multiplicité des cartes ou des processeurs comme décrit dans les documents US5666412 ou US5774546.

Dans ces deux derniers exemples un décodeur de télévision à péage est équipé d'un lecteur de carte à deux embouchures dans chacune desquelles est insérée une carte à puce. La première carte comprend un élément d'identification comportant des informations personnelles et officielles partiellement cryptées. La deuxième carte à puce comprend un élément d'application contenant des clés d'accès et des algorithmes permettant l'accès aux informations contenues dans l'élément d'identification de la première carte. Une telle configuration se présente notamment dans un dispositif de contrôle parental qui nécessite un deuxième niveau de contrôle d'accès en utilisant une clé particulière.

Selon une variante du document cité, les puces ou circuits intégrés de chacune des deux cartes sont regroupées sur un seul support constituant ainsi une seule carte dont les circuits intégrés sont accessibles séparément par le lecteur de carte. Cette carte inclut les données nécessaires définissant plusieurs niveaux de décryption permettant l'accès aux données contenues dans l'un ou l'autre des deux circuits intégrés.

Le document DE19811646 décrit un composant IC de module de sécurité comprenant un premier processeur ayant un bus d'interfaçage avec l'extérieur et connecté à une mémoire programme, à une mémoire non-volatile programmable et effaçable et à une mémoire vive servant au stockage temporaire de données en cours de traitement, et un second processeur, connecté au premier processeur et à deux mémoires, découplées du bus d'interfaçage avec l'extérieur.

Les moyens de l'art antérieur mis en oeuvre pour améliorer la sécurité des cartes d'accès à des programmes cryptés se sont parfois montrés vulnérables à certaines attaques, notamment aux attaques par perturbations ou "glitch attacks". Il s'agit d'une méthode de violation de la sécurité d'un processeur cryptographique par interruption de l'exécution d'une ou plusieurs instructions. L'attaquant analyse les signaux générés par une séquence d'instructions spécifiques issue du processeur et au moment précis de l'exécution d'une instruction de comparaison ou de saut, il applique des signaux de perturbation sur le bus relié au processeur via le lecteur de carte par exemple. Ces signaux sous forme de train d'impulsions brèves bloquent l'exécution d'instructions ou court-circuitent des programmes critiques d'authentification permettant ainsi un libre accès à des données protégées.

### But de l'invention

Le but de la présente invention est d'améliorer de manière optimale la sécurité des cartes à puces en empêchant le contrôle frauduleux du ou des processeurs cryptographiques au moyen de signaux externes venant perturber le déroulement normal des tâches du ou des processeurs.

### Description sommaire de l'invention

Le but de l'invention est atteint par un composant de module de sécurité comprenant au moins deux processeurs connectés chacun à des mémoires programme, à des mémoires non-volatiles programmables et effaçables (EEPROM) contenant des données et à des mémoires vives (RAM) servant au stockage temporaire de données en cours de traitement, le premier processeur ayant un bus d'interfaçage avec l'extérieur du composant, caractérisé en ce que le second processeur est connecté au premier processeur par l'intermédiaire d'une mémoire d'échange (DPR), la mémoire non-volatile programmable et effaçable du premier processeur étant uniquement en accès lecture pour ledit premier processeur, le second processeur disposant d'un accès en lecture et écriture sur ladite mémoire non-volatile programmable et effaçable du premier processeur.

On entend par composant une unité incluant tous les éléments nécessaires aux opérations cryptographiques et réunis sur un support unique afin d'en assurer la sécurité. Ces composants sont généralement composés d'une seule puce électronique, puce qui dispose d'une protection anti-intrusion mécanique ou électronique. D'autres structures composées par exemple de deux puces électroniques sont également assimilées à l'appellation "composant" pour autant qu'elles soient intimement liées et fournies par les distributeurs comme un seul élément.

Ce composant fabriqué de préférence sur une seule puce de silicium est en général implanté dans un support portable, en général une carte à puce amovible. Cette dernière est équipée d'accès reliés au premier processeur constitués soit par un ensemble de contacts disposé sur l'une des faces de la carte selon la norme ISO 7816, soit par une antenne permettant un échange de données par voie électromagnétique sans contact galvanique (norme ISO 14443) avec un dispositif de lecture - écriture approprié.

Selon un autre mode de réalisation du composant, ce dernier est une partie d'un module électronique plus important comprenant des fonctionnalités de traitement des données encryptées. Une partie de ce module traite par exemple les données encryptées DVB et le composant n'est qu'une partie du silicium en charge de ces traitements. Il est à noter que le module électronique peut soit être monté dans l'unité de réception, soit être connecté d'une manière amovible à ladite unité de réception.

La configuration du composant selon la présente invention permet d'isoler totalement le second processeur par rapport aux accès extérieurs. En effet, il n'y aucune connexion directe entre les deux processeurs qui permettrait d'accéder au second processeur à l'aide d'instructions adéquates transmises au premier processeur via les accès extérieurs. Les mémoires reliant les deux processeurs font office de barrière bloquant d'une part des commandes indésirables provenant des accès extérieurs et d'autre part, elles empêchent l'analyse, via les mêmes accès, des signaux qui transitent entre les deux processeurs.

Le premier processeur ne peut de lui-même modifier son programme. Toute modification de son programme doit être vérifiée par le second processeur.

Le second processeur peut ainsi effectuer des opérations de cryptographie indépendamment des opérations exécutées par le premier processeur. De plus, ce dernier ne peut pas effectuer certaines tâches critiques relatives à la sécurité sans l'autorisation du second processeur.

L'invention sera mieux comprise grâce à la description détaillée qui va suivre et qui se réfère à l'unique figure annexée donnée à titre d'exemple nullement limitatif.

### Description sommaire de la figure

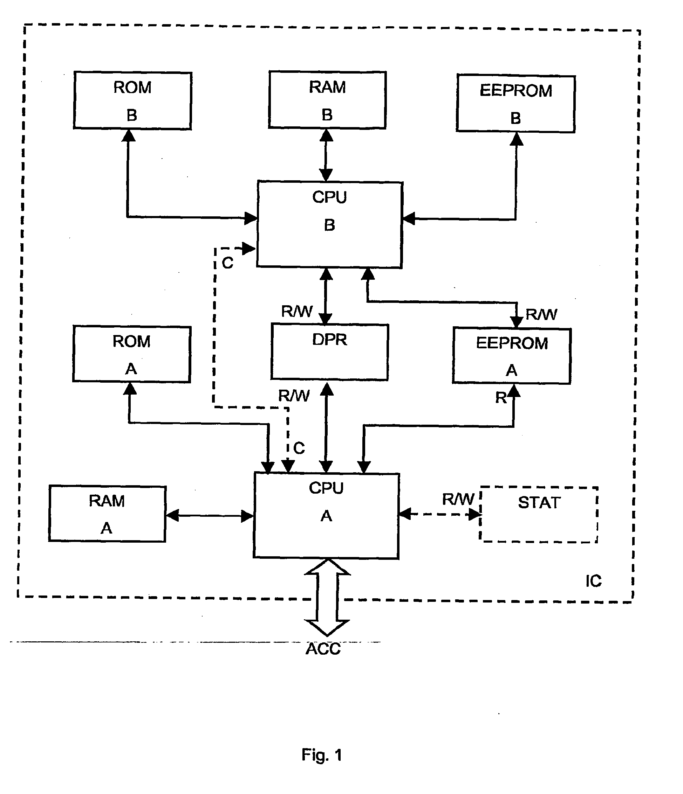

La figure 1 illustre un schéma bloc d'un composant de module de sécurité comprenant deux processeurs connectés chacun à un jeu de mémoires et reliés entre eux par une mémoire d'échange.

### Description détaillée de l'invention et exemples de mise en oeuvre

Le composant IC de la figure 1 est réalisé en général sur une seule puce qui est montée sur un support portable constitué, selon un mode de réalisation préféré, par une carte munie d'accès ACC sous forme de contacts ou d'une antenne.

Le composant IC comprend deux processeurs CPU A, CPU B reliés par l'intermédiaire d'une mémoire vive d'échange DPR et par une mémoire non-volatile programmable et effaçable EEPROM A. Le premier processeur CPU A est connecté d'une part aux accès ACC et d'autre part à une mémoire vive RAM A et à une mémoire morte ROM A. Le second processeur CPU B est également connecté à une mémoire vive RAM B et à une mémoire morte ROM B ainsi qu'à une mémoire non-volatile programmable et effaçable EEPROM B.

Selon une variante, une mémoire supplémentaire non-volatile programmable et effaçable STAT peut être connectée en mode lecture / écriture R/W au premier processeur CPU A. Elle sert à stocker par exemple des données d'historique de fonctionnement du composant qui seraient accessibles en lecture depuis l'extérieur via les accès ACC.

Une des particularités essentielles selon l'invention consiste en ce que la connexion du premier processeur CPU A avec la mémoire non-volatile programmable et effaçable EEPROM A est configurée en lecture seule R tandis que la connexion avec le second processeur CPU B est configurée à la fois en lecture et en écriture R/W. Un autre aspect de cette invention est la présence de la mémoire vive d'échange DPR dont les connexions à chacun des processeurs CPU A et CPU B sont configurées en lecture et en écriture R/W.

Le premier processeur CPU A de ce composant, accessible depuis l'extérieur, est chargé d'exécuter des tâches connues des modules de sécurité c'est-à-dire telles que la gestion des mots de contrôle CW et des messages de contrôle ECM ainsi que la vérification des droits de la carte. On peut imaginer que des opérations sécurisées telles que l'authentification, le décryptage de message de gestion EMM ou la gestion de clés et des algorithmes de décryptage sont réservées au second processeur CPU B.

Le second processeur CPU B gère et exécute toutes les opérations sécurisées faisant appel à des clés d'encryption / décryption stockées, par exemple, dans la mémoire morte ROM B. La mémoire non-volatile programmable et effaçable EEPROM B contient les programmes ainsi que les algorithmes nécessaires à la décryption selon des instructions communiquées par le premier processeur CPU A via la mémoire vive d'échange DPR.

Grâce à la configuration en lecture seule du premier processeur CPU A, le contenu de la mémoire non-volatile programmable et effaçable EEPROM A ne peut pas être modifié depuis l'extérieur. Toute instruction du processeur issue de commandes reçues via les accès ACC est stockée temporairement dans la mémoire vive d'échange DPR et son exécution est vérifiée par le second processeur CPU B avant que les données résultantes soit stockées par ledit second processeur CPU B dans la mémoire non-volatile EEPROM A via le port R/W.

Selon une variante, le processeur CPU B peut contrôler directement le processeur CPU A au moyen d'une connexion C sans passer par la mémoire d'échange DPR. Un tel contrôle permet par exemple une activation ou un blocage rapide du processeur CPU A en fonction du résultat d'une vérification effectuée par le processeur CPU B.

Une carte comportant un composant tel que décrit plus haut peut être utilisée dans un décodeur de télévision numérique à péage où une sécurité élevée est exigée d'une part, au niveau des droits d'accès à des données cryptées d'un flux audio vidéo diffusé par câble ou satellite et d'autre part, au niveau des logiciels de fonctionnement de la carte.

Une fonction de la carte consiste à contrôler l'accès à des données cryptées d'un flux audio vidéo reçu par le décodeur en vérifiant des messages de contrôle ECM accompagnant lesdites données cryptées. Lorsque cette vérification aboutit, le décryptage des données du flux est autorisé en fonction des droits d'accès aux données audio vidéo inclus dans le message ECM.

Pour définir les droits d'un utilisateur, le centre de gestion envoie des messages d'administration EMM qui sont généralement individuels à savoir encryptés par une clé unique pour cet utilisateur. Selon un exemple d'application de l'invention, ce type de message ne peut être décrypté par le processeur CPU A puisque ce dernier ne dispose pas de la clé personnelle unique de l'utilisateur. Cette clé peut être symétrique ou asymétrique (clé privée et clé publique).

La mémoire qui va contenir ce droit est la mémoire EEPROM A dans notre exemple. Cette mémoire étant accessible en écriture uniquement par le processeur CPU B, le processeur CPU A va transmettre le message d'administration EMM au processeur CPU B via la mémoire d'échange DPR. Le processeur CPU B va débuter son cycle de décryption du message, et après vérification, va mettre à jour la mémoire EEPROM A avec les nouveaux droits.

Il est également possible de placer ces droits dans la mémoire STAT selon une autre variante. Dans ce cas, le résultat de la décryption du message EMM sera transmis au processeur CPU A via la mémoire d'échange DPR pour être stocké dans la mémoire STAT.

Le téléchargement du logiciel de la carte stocké dans la mémoire non-volatile EEPROM A ou la mise à jour de ce logiciel est géré avec une sécurité accrue dans une carte équipée d'un composant selon l'invention. En effet, il ne sera pas possible de stocker un logiciel dans une telle carte via les accès ACC et le processeur CPU A sans effectuer des vérifications par le biais du processeur CPU B.

Le logiciel ou une mise à jour est reçu par le décodeur sous forme de blocs cryptés qui seront ensuite acheminés un par un au premier processeur CPU A via les accès ACC de la carte. Le processeur CPU A ne peut décrypter car il ne dispose pas de la clé correspondante. Ces blocs sont transmis au CPU B via la mémoire d'échange DPR. Le CPU B va lancer un processus de décryption dans un mode sécurisé donc ininterruptible. Le résultat de cette opération est stocké dans la mémoire spécifique du CPU B soit EEPROM B.

Il est prévu que la valeur de vérification ou la signature est contenue dans un message d'administration EMM. Le CPU B reçoit ce message via la mémoire d'échange DPR et va pouvoir calculer la signature du bloc de données précédemment déchiffré et la comparer avec cette reçue dans le message.

Seulement une fois cette vérification opérée, le CPU B va initier un cycle d'écriture de la mémoire du CPU A à savoir EEPROM A.

Au cas où le résultat de cette comparaison serait négatif, le processus de téléchargement ou de mise à jour du logiciel s'arrête et le processeur CPU A transmet soit un message d'erreur au décodeur, soit une commande de réinitialisation du téléchargement.

Lorsque tous les blocs sont vérifiés avec succès et stockés dans la mémoire EEPROM B, le processeur CPU B les transfère dans la mémoire EEPROM A. Le processeur CPU A se charge ensuite de l'installation et de la mise en service du nouveau logiciel.

Selon une variante, avant le transfert d'un bloc vers la mémoire EEPROM A, l'ensemble des blocs stockés dans la mémoire EEPROM B peut encore être vérifié par le processeur CPU B en calculant une empreinte sur la totalité des blocs. La comparaison s'effectue alors avec la signature globale du logiciel obtenue, elle aussi, via un message EMM.

Selon une variante de fonctionnement, les messages d'administration EMM sont traités par le CPU A. Il est à noter que lors de chaque session de décryptage de ces messages EMM, le processeur CPU A demande la clé nécessaire au processeur B pour une exécution directe de la décryption. Une fois la décryption terminée, la clé est effacée et uniquement stockée dans la mémoire vive RAM A du CPU A. Il n'y a donc pas de stockage intermédiaire de la clé dans une mémoire non volatile EEPROM A qui serait ainsi accessible en lecture via les accès ACC. Seul des résultats intermédiaires de calculs sont stockés dans la mémoire vive RAM A et le processeur CPU A transfère les données finales (droits par exemple) dans la mémoire STAT.

Si le nombre de tâches sécurisées venait à augmenter et dépasser les capacités d'un seul processeur, il est envisageable de multiplier le nombre de processeurs en fonction de la complexité des opérations à exécuter. Le schéma bloc d'une telle configuration serait une extension de celui de la figure 1 où chaque processeur supplémentaire serait connecté à une mémoire vive d'échange DPR à deux ports dont l'un serait relié au premier processeur possédant les accès vers l'extérieur.

Selon une variante, la mémoire vive d'échange DPR de séparation peut comporter autant de ports supplémentaires qu'il est nécessaire pour la connexion de processeurs additionnels.

## Revendications

1. Composant IC de module de sécurité comprenant au moins deux processeurs CPU A, CPU B reliés par l'intermédiaire d'une mémoire d'échange DPR et par une mémoire non-volatile programmable et effaçable EEPROM A, le premier processeur CPU A ayant un bus d'interfaçage avec l'extérieur du composant IC et étant connecté à une mémoire vive RAM A et à une mémoire morte ROM A, le second processeur CPU B étant connecté à une mémoire vive RAM B et à une mémoire morte ROM B ainsi qu'à une mémoire non-volatile programmable et effaçable EEPROM B, les mémoires vives RAM A, RAM B, servant au stockage temporaire de données en cours de traitement, ledit composant IC étant **caractérisé en ce que**
la mémoire non-volatile programmable et effaçable EEPROM A du premier processeur CPU A étant uniquement en accès lecture R pour ledit premier processeur CPU A, le second processeur CPU B disposant d'un accès en lecture et écriture R/W sur ladite mémoire non-volatile programmable et effaçable EEPROM A du premier processeur CPU A,
**en ce que** la mémoire d'échange DPR consiste en une mémoire vive destinée au stockage temporaire de données, ladite mémoire DPR étant équipée de deux ports, configurés chacun à la fois en lecture et en écriture R/W, dont l'un est connecté au premier processeur CPU A et l'autre au second processeur CPU B,
et **en ce que** toutes opérations sécurisées sont gérées et exécutées par le second processeur CPU B.

2. Composant selon la revendication 1, **caractérisé en ce qu'**il est monté dans un support portable comportant des accès ACC destinés à l'échange de données avec une unité de traitement extérieure, lesdits accès ACC étant reliés au premier processeur CPU A via le bus d'interfaçage.

3. Composant selon les revendications 1 et 2, **caractérisé en ce que** ladite mémoire morte ROM B et ladite mémoire non-volatile programmable et effaçable EEPROM B contiennent les programmes ainsi que les algorithmes nécessaires à la décryption selon des instructions communiquées par le premier processeur CPU A via la mémoire vive d'échange DPR.

4. Composant selon la revendication 2, **caractérisé en ce que** le second processeur CPU B comprend des moyens de vérification de données reçues via les accès ACC et la mémoire vive d'échange DPR, lesdites données étant stockées temporairement dans ladite mémoire non-volatile programmable et effaçable EEPROM B lors de la vérification.

5. Composant selon les revendications 1 à 4, **caractérisé en ce que** le second processeur CPU B comprend des moyens de stockage via le port R/W des données vérifiées dans ladite mémoire non-volatile programmable et effaçable EEPROM A du premier processeur CPU A.

6. Composant selon la revendication 1, **caractérisé en ce qu'**il est monté dans une carte dotée de contacts galvaniques, de format ISO 7816, formant des accès ACC, ladite carte jouant le rôle de module sécurité amovible dans un décodeur de télévision à péage.

7. Composant selon la revendication 1, **caractérisé en ce qu'**il comprend au moins un processeur supplémentaire connecté à une mémoire vive d'échange à deux ports dont l'un est relié au premier processeur CPU A connecté aux accès ACC vers l'extérieur.

8. Composant selon la revendication 1, **caractérisé en ce qu'**il comprend au moins un processeur supplémentaire connecté à un port supplémentaire de la mémoire vive d'échange DPR.

## Claims

1. Component IC of a security module comprising at least two processors CPU A, CPU B linked through an exchange memory DPR and by a non-volatile programmable and erasable memory EEPROM A, the first processor CPU A having an interface bus with the exterior of the component IC and being connected to a random access memory RAM A and to a read only memory ROM A, the second processor CPU B being connected to a random access memory RAM B and to a read only memory ROM B as well as to a non-volatile programmable and erasable memory EEPROM B, the random access memories RAM A, RAM B being used for temporary storage of data in process, said IC component being **characterized in that**
the non-volatile programmable and erasable memory EEPROM A of the first processor CPU A having read only access R for said first processor CPU A, the second processor CPU B having read and write R/W access on said non-volatile programmable and erasable memory EEPROM A of the first processor CPU A
**in that** the exchange memory DPR consists of a random access memory intended for temporary data storage, said exchange memory DPR being equipped with two ports, each configured in read and write R/W, one of which is connected to the first processor CPU A and the other to the second processor CPU B.
and **in that** all secured operations are managed and executed by the second processor CPU B.

2. Component according to claim 1, **characterized in that** it is mounted on a portable support including accesses ACC intended for the exchange of data with an external processing unit, said accesses ACC being connected to the first processor CPU A via the interface bus.

3. Component according to claims 1 and 2, **characterized in that** said read only memory ROM B and said non-volatile programmable and erasable memory EEPROM B contain the programs as well as the algorithms necessary for decryption according to instructions communicated by the first processor CPU A via the exchange random access memory DPR.

4. Component according to claim 2, **characterized in that** the second processor CPU B includes means for verification of data received via the accesses ACC and the exchange random access memory DPR, said data being temporarily stored in said non-volatile programmable and erasable memory EEPROM B during verification.

5. Component according to claims 1 to 4, **characterized in that** the second processor CPU B includes storage means via the port R/W of the data verified in said non-volatile programmable and erasable memory EEPROM A of the first processor CPU A.

6. Component according to claim 1, **characterized in that** it is mounted on a card provided with galvanic contacts, of ISO 7816 format, forming accesses ACC, said card functioning as a removable security module in a Pay-TV decoder.

7. Component according to claim 1, **characterized in that** it includes at least one supplementary processor connected to an exchange random access memory with two ports, one of which being connected to the first processor CPU A connected to the accesses towards the exterior.

8. Component according to claim 1, **characterized in that** it includes at least one supplementary processor connected to a supplementary port of the exchange random access memory DPR.

## Patentansprüche

1. IC-Bauteil für einen Sicherheitsmodul, das zumindest zwei Prozessoren CPU A, CPU B umfasst, die über einen Austauschspeicher DPR und über einen programmierbaren und löschbaren, nichtflüchtigen Speicher EEPROM A verbunden sind, wobei der erste Prozessor CPU A einen Schnittstellenbus an der Aussenseite des IC-Bauteils besitzt und mit einem Arbeitsspeicher RAM A sowie einem Festwertspeicher ROM A verbunden ist, während der zweite Prozessor CPU B mit einem Arbeisspeicher RAM B und einem Festwertspeicher ROM B sowie mit einem programmierbaren und löschbaren, nichtflüchtigen Speicher EEPROM B verbunden ist, wobei die Arbeitsspeicher RAM A, RAM B der vorübergehenden Speicherung von in Verarbeitung befindlichen Daten dienen und das IC-Bauteil **dadurch gekennzeichnet ist, dass**
der programmierbare und löschbare, nichtflüchtige Speicher EEPROM A des ersten Prozessors CPU A lediglich für ein Lesen für den ersten Prozessor CPU A zugänglich ist, während der zweite Prozessor CPU B über einen Lese- und Schreibzugang R/W zum programmierbaren und löschbaren, nichtflüchtigen Speicher EEPROM A des ersten Prozessors CPU A verfügt,
**dadurch**, dass der Austauschspeicher DPR aus einem Arbeitsspeicher besteht, der für eine vorübergehende Datenspeicherung bestimmt ist, wobei der Speicher DPR mit zwei Ports ausgerüstet ist, jeder zugleich für Lesen und für Schreiben R/W, von denen der eine mit dem ersten Prozessor CPU A und der andere mit dem zweiten Prozessor CPU B verbunden ist,
und **dadurch**, dass alle gesicherten Operationen durch den zweiten Prozessor CPU B verwaltet und ausgeführt werden.

2. Bauteil nach Anspruch 1, **dadurch gekennzeichnet, dass** es in einen tragbaren Träger eingebaut ist, der Zugänge ACC aufweist, die für den Datenaustausch mit einer äusseren Verarbeitungseinheit bestimmt sind, wobei die Zugänge ACC über den Schnittstellenbus mit dem ersten Prozessor CPU A verbunden sind.

3. Bauteil nach Ansprüchen 1 und 2, **dadurch gekennzeichnet, dass** der Festwertspeicher ROM B und der programmierbare und löschbare, nichtflüchtige Speicher EEPROM B die Programme wie auch die Algorithmen enthalten, die für eine Entschlüsselung gemäss Anweisungen erforderlich sind, die vom ersten Prozessor CPU A über den Austausch-Arbeitsspeicher DPR übermittelt werden.

4. Bauteil nach Anspruch 2, **dadurch gekennzeichnet, dass** der zweite Prozessor CPU B Mittel für eine Überprüfung von Daten umfasst, die über die Zugänge ACC und den Austausch-Arbeitsspeicher DPR empfangen werden, wobei diese Daten während der Überprüfung vorübergehend im programmierbaren und löschbaren, nichtflüchtigen Speicher EEPROM B gespeichert werden.

5. Bauteil nach Ansprüchen 1 bis 4, **dadurch gekennzeichnet, dass** der zweite Prozessor CPU B Mittel umfasst, um über den Port R/W Daten im programmierbaren und löschbaren, nichtflüchtigen Speicher EEPROM A des ersten Prozessors CPU A zu speichern, die überprüft worden sind.

6. Bauteil nach Anspruch 1, **dadurch gekennzeichnet, dass** es in eine Karte eingebaut ist, die mit elektrischen Kontakten vom Format ISO 7816 versehen ist, die die Zugänge ACC bilden, wobei diese Karte die Funktion eines abnehmbaren Sicherheitsmoduls in einem Gebührenfernsehdekodierer hat.

7. Bauteil nach Anspruch 1, **dadurch gekennzeichnet, dass** es zumindest einen zusätzlichen Prozessor umfasst, der mit einem Austausch-Arbeitsspeicher mit zwei Ports verbunden ist, von denen einer mit dem ersten Prozessor CPU verbunden ist, der mit den Zugängen ACC nach aussen verbunden ist.

8. Bauteil nach Anspruch 1, **dadurch gekennzeichnet, dass** es zumindest einen zusätzlichen Prozessor umfasst, der an einen zusätzlichen Port des Austausch-Arbeitsspeichers DPR angeschlossen ist.
